# EUROPEAN PATENT APPLICATION

(11) **EP 3 150 686 A1**
(43) Date of publication of application: **05.04.2017**
(21) Application number: 15187334.6
(22) Date of filing: 29.09.2015
(51) Int. Cl.: C09K 8/58

(54) **PROCESS FOR OIL RECOVERY**

(71) Applicant: Shell Internationale Research Maatschappij B.V., 2596 HR Den Haag (NL)
(72) Inventor: PARSONS, Christopher Arthur, 2288 GS Rijswijk (NL); VAN DER HOEVEN, Steven, 2288 GS Rijswijk (NL); EIKMANS, Hendrik, 2288 GS Rijswijk (NL); VEENSTRA, Peter, 1031 HW Amsterdam (NL)
(74) Representative: Matthezing, Robert Maarten

(57) **Abstract**

A process for recovering oil from an oil-bearing formation which process comprises injecting into the formation an aqueous solution of dimethyl ether which solution is prepared by (a) mixing dimethyl ether and feed water in a first mixing zone to obtain a dispersion of dimethyl ether and water, and (b) further mixing the dispersion obtained in step (a) in a second mixing zone to obtain the aqueous solution of dimethyl ether.

## Description

The present invention relates to a process for recovering oil from an oil-bearing formation.

### Background of the Invention

In the recovery of oil from a subterranean formation, only a portion of the oil in the formation generally is recovered using primary recovery methods utilizing the natural formation pressure to produce the oil. A portion of the oil that cannot be produced from the formation using primary recovery methods may be produced by secondary recovery methods such as water flooding. Oil that cannot be produced from the formation using primary recovery methods and optionally secondary methods such as water flooding, may be produced by chemical enhanced oil recovery, also referred to as EOR.

Chemical enhanced oil recovery can utilize recovering agent, surfactant or polymer or a combination of one or more of these compounds with other chemicals such as gas to flood an oil-bearing formation to increase the amount of oil recovered from the formation. Recovering agents are well known and can be miscible or immiscible with the oil. A recovering agent which has been found to be especially suitable is dimethyl ether. Its use has been described in various publications such as WO2010002693, WO2013106156 and WO2014200801. After recovering oil and optionally gas from the formation with the help of dimethyl ether, the low boiling point of dimethyl ether generally allows to separate dimethyl ether from higher boiling components by lowering the pressure or by distillation or flash distillation.

In many cases, it is advantageous to apply an aqueous solution of dimethyl ether because such solution tends to give better oil recovery than each of the components per se. However, dimethyl ether does not always fully dissolve in water. This is especially the case if large volumes of water and dimethyl ether are to be mixed and/or the mixing temperature is relatively low. A mixture of separate phases tends to be unsuitable for use in enhanced oil recovery because it can cause operating problems during injection into a formation. An additional problem is that a saturated aqueous solution of dimethyl ether can become an oversaturated, two-phase composition after injection into the formation due to the lower temperature of the subsurface. Furthermore, the amount of dimethyl ether which can be dissolved in water depends on the salt content of the water used for preparing the solution, more especially its multivalent cation content. It would be beneficial if it is possible to differ the dimethyl ether content of the solution depending on the salt content, more especially multivalent cation content, of the water used for preparing the solution.

The aim of the present invention is to prepare an aqueous solution of dimethyl ether for use in recovering oil and optionally gas from an oil-bearing formation. It is especially advantageous if the solution consists of a single phase and if the dimethyl ether content of the solution can be controlled.

### Summary of the Invention

A process now has been found which allows preparation of an aqueous solution of dimethyl ether which can be used for recovering oil from an oil-bearing formation.

The present invention relates to a process for recovering oil from an oil-bearing formation which process comprises injecting into the formation an aqueous solution of dimethyl ether which solution is prepared by (a) mixing dimethyl ether and feed water in a first mixing zone to obtain a dispersion of dimethyl ether and water, and (b) further mixing the dispersion obtained in step (a) in a second mixing zone to obtain the aqueous solution of dimethyl ether. It is especially advantageous that the process can be controlled to give an aqueous solution consisting of a single phase. The second mixing zone is located downstream of the first mixing zone.

The process of the present invention is attractive in that the mixing can be carried out with the help of equipment which does not contain moving parts. This is especially important in enhanced oil recovery where large volumes of fluids must be prepared for injection into the formation. Furthermore, the process allows obtaining a homogeneous solution of which the dimethyl ether content can be carefully controlled. This makes it possible to prepare a solution of which the dimethyl ether content can be changed during operation in order to accommodate for a different salt content of the feed water and/or a different temperature of the subsurface formation into which the solution is to be injected. A mixing process which is easy to control makes it possible to dissolve the maximum amount of dimethyl ether for the circumstances in question while making efficient use of the various product streams.

### Brief Description of the Drawing

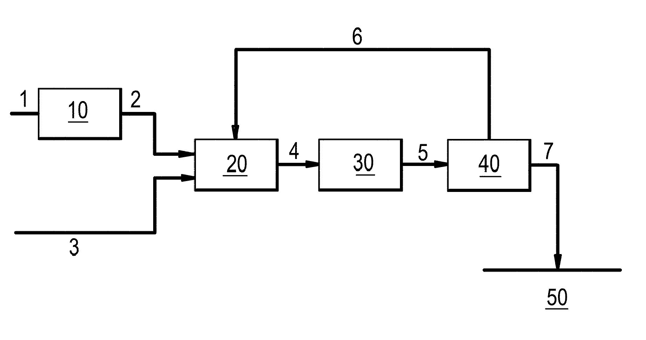

Fig. 1 is a diagram of a process for preparing an aqueous solution of dimethyl ether with the help of a first mixing zone for preparing a dispersion of dimethyl ether and water and a second mixing zone for converting the dispersion into an aqueous solution of dimethyl ether and water.

### Detailed Description of the Invention

Water for use in enhanced oil recovery can be derived from various sources. The water may be provided from a water source such as a river, a lake, a fresh water sea, an aquifer, formation water, seawater, brackish water or a brine solution provided by processing a feed water source. Furthermore, it is possible to use water produced in the oil recovery. In many cases, the water which is available on site will contain a relatively large amount of salt. Although the Total Dissolved Solids (TDS) content as measured by ASTM D5907-13 also includes other compounds such as organics, the TDS content is often used as a measure for the amount of salt present in water. A further relevant feature of the water is its hardness namely the concentration of multivalent cations. The hardness of the feed water is especially important for the present invention as the solubility of multivalent cations tends to decrease in the presence of dimethyl ether. This phenomenon is especially pronounced for sulphate multivalent cation salts. A further reason to be interested in the multivalent cations content of water is that these cations tend to lead to scaling in the formation.

The feed water for use in the process of the present invention generally will have a TDS of from 2000 to 200,000 ppm. More specifically, the feed water tends to have a TDS of at most 50,000 ppm, more specifically at most 35,000 ppm, more specifically at most 30,000 ppm, more specifically at most 20,000 ppm, more specifically at most 15,000 ppm, most specifically at most 10,000 ppm.

The feed water generally will contain at most 10 parts per million mass (ppm) of multivalent cations, more especially at most 8 ppm, more specifically at most 5 ppm of multivalent cations, more specifically less than 4 ppm, more specifically less than 3 ppm, more specifically less than 2 ppm, most specifically less than 1 ppm of multivalent cations. The multivalent salt ion content can be determined with the help of ASTM D1126. The multivalent cations more specifically are divalent cations.

The salt content of the water which is injected into the formation should not be too low to prevent damage to the formation. The preferred minimum concentration will differ per formation. It is possible to increase the salt content of the feed water by mixing softened water with untreated water. It is preferred that the salt present in the softened water for use as feed water in the present invention substantially consists of monovalent cations. Most preferably, the salt present in the softened water consists of at least 95 % by weight (%wt) of monovalent cation containing salt, more specifically at least 98 %wt of monovalent cation containing salt, most specifically at least 99 %wt of monovalent cation containing salt.

The dimethyl ether preferably is substantially liquid when being mixed with the feed water in order to facilitate mixing. The person skilled in the art will be able to assess the temperature and pressure to be applied in order to achieve this. A certain amount of gaseous dimethyl ether can be allowed to be present besides liquid dimethyl ether. Preferably, at least 90 wt% of the dimethyl ether is present in liquid form, more specifically at least 95 wt%, most specifically at least 98 %wt.

Preferably, the dimethyl ether is mixed with the feed water at pressure of from 1 to 150 bara, more specifically of from 1 to 20 bara, more specifically of from 2 to 10 bara, more specifically of from 3 to 10 bara. The temperature preferably is of from 10 to 100 °C, more specifically of from 10 to 90 °C, more specifically of from 15 to 80 °C, more specifically of from 20 to 70 °C.

Other compounds besides dimethyl ether can be present in the composition to be mixed with the feed water. Such further compounds are especially likely to be present if the dimethyl ether was separated from fluid recovered from a formation into which aqueous solution of dimethyl ether has been injected. Dimethyl ether containing fluid for use in the process of the present invention may be obtained by removing oil and optionally gas and/or other compounds from fluid is recovered from such formation. This allows recycle of at least part of the dimethyl ether used in the enhanced oil recovery. The dimethyl ether containing composition to be mixed with feed water in the process of the present invention preferably consists for at least 80 %wt of dimethyl ether. More specifically, the composition to be mixed with the feed water consists for at least 85 %wt of dimethyl ether, more specifically at least 90 %wt of dimethyl ether, most specifically at least 95 %wt of dimethylether.

The ratio of dimethyl ether to feed water which is being mixed in step (a) depends on the content of dimethyl ether desired for the aqueous solution to be injected into the formation. Generally, the feed water is mixed with dimethyl ether such that the mixture contains of from 40 to 98 %wt of feed water and of from 2 to 60 %wt of dimethyl ether, more specifically of from 40 to 95 %wt of water and of from 5 to 60 %wt of dimethyl ether. Most preferably, the aqueous solution of dimethyl ether contains of from 60 to 95 %wt of water and of from 5 to 40 %wt of dimethyl ether.

The aqueous solution prepared by the process of the present invention preferably consists of a single phase. Preferably, the aqueous solution obtained in the process of the present invention does not contain a separate dimethyl ether phase.

In the first mixing zone, water and dimethyl ether are mixed. The first mixing zone can be horizontal in that the fluids flow substantially horizontally or the mixing zone can be vertical in that the fluids flow substantially vertically. The dimethyl ether and water generally have to be contacted intensely in order to obtain a dispersion of the ether in the water due to the fact that the density of water is much higher than the density of dimethyl ether. It is possible that the water and dimethyl ether are fed to the mixing zone in combination. If a combination of water and dimethyl ether is sent to the first mixing zone, it is preferred that the combined water and dimethyl ether are in turbulent flow. However, the dimethyl ether and water preferably are fed separately to the first mixing zone.

The mass transfer in each the first mixing zone and the second mixing zone preferably takes place by convection rather than by diffusion. Preferably, the first mixing zone and the second mixing zone each comprise a pipe containing an internal which enhances mixing.

It is preferred that the first mixing zone contains an in-line mixer. In view of the desired intense contact between the water and the dimethyl ether, the mixing zone preferably contains at least 2 successive static mixer elements, more preferably at least 3 elements, most preferably of from 3 to 10 elements. A single static mixer element is an internal which per se is suitable for mixing fluids. A single element often has a diameter which is of from 50 to 100 % of the inner diameter of the pipe, more preferably of from 50 to 90 %, more preferably of from 60 to 85 % of the inner diameter, while its length tends to be of from 50 to 150 % of the diameter of the pipe in which it is located. Mixing elements have been described in US4062524 and US5520460. A suitable mixer element contains blades which are at an angle of at least 30 degrees with the fluid flow, more specifically at least 40 degrees. Suitable mixers for use in the first zone are available from Statiflo International. Further examples of suitable mixers are static mixer types SMX and SMX plus which are commercially available from Sulzer Ltd. SMX is a trade mark. Furthermore, suitable mixers are available from Chemineer for example the Kenics KM series static mixers. Kenics is a trade mark.

The dispersion prepared in the first mixing zone preferably is a dispersion containing dimethyl ether droplets in a continuous water phase. The dimethyl ether droplets in the dispersion preferably have a weight average diameter of less than 20 mm diameter, more preferably less than 10mm, more preferably less than 5 mm, more preferably less than 2 mm, most preferably at most 1 mm. The dimethyl ether droplets preferably have a weight average diameter of at least 0.001 mm, more preferably at least 0.01 mm, more specifically at least 0.05 mm.

In order to make the aqueous solution suitable for use in enhanced oil recovery, biocides and/or anti-scaling agent are preferably present in the aqueous solution injected into the formation.

The second mixing zone can consist of a pipe without internals provided that the pipe is long enough such as at least 0.5 km, more specifically at least 1 km. However, the second mixing zone preferably consists of a pipe containing one or more internals. Preferably, the second mixing zone contains an in-line mixer. Most preferably, the mixer is a blending mixer in which the water and dimethyl ether are blended together, more preferably are blended together in a turbulent flow regime. An example of a suitable mixer is a mixer known as SMV and commercially available from Sulzer Ltd. Furthermore, suitable mixers are available from Chemineer for example the Kenics KM series static mixers. Kenics is a trade mark. The second mixing zone preferably contains at least 2 successive blending mixer elements, more preferably at least 3 elements, most preferably of from 3 to 10 elements. A single element often has a diameter which is of from 50 to 100 % of the inner diameter of the pipe, more preferably of from 50 to 90 %, more preferably of from 60 to 85 % of the inner diameter, while its length tends to be of from 50 to 150 % of the diameter of the pipe in which it is located.

Someone skilled in the art will be able to assess whether a mixer is suitable for each the first mixing zone and the second mixing zone on the basis of the fluids to be mixed and the mixture to be attained such as the weight average droplet size. In most cases, the combination of mixer elements present in the first mixing zone differs from the combination of mixer elements present in the second mixing zone.

If the first and second mixing zone have the same length and diameter, the pressure drop over the first mixing zone generally is larger than the pressure drop over the second mixing zone. Preferably, the pressure drop over the first mixing zone is at least 50 % higher than the pressure drop over the second zone, more preferably at least 75 %, more preferably at least 100 %. If the zones have different length and/or diameter, the pressure drop for the zones is to be compared based on the pressure drop calculated by a person skilled in the art for zones having the same length and diameter.

The following example depicted in Fig. 1 is presented to further illustrate the present invention. It is not to be construed as unduly limiting the scope of the present invention.

Fig. 1 shows a process for preparing an aqueous solution for injection into an oil-bearing formation to recover oil and optionally gas. The process comprises a storage facility 10 for storing dimethyl ether. Dimethyl ether is fed to this facility via line 1. Dimethyl ether is fed from storage facility 10 to the first mixing facility 20 via line 2 while feed water is added to the first mixing facility 20 via line 3. In the first mixing facility 20, the feed water and dimethyl ether are mixed thoroughly. The first mixing facility can consist of a plurality of mixer elements. The dispersion obtained in the first mixing zone 20 is sent via line 4 to the second mixing zone 30 where the dispersion is mixed further to obtain an aqueous solution of dimethyl ether. The solution obtained can be injected into an oil-bearing formation. Preferably, the aqueous solution of dimethyl ether obtained in the second mixing zone 30 is sent via line 5 to test facility 40 where the dimethyl ether content of the solution is assessed. Preferably, this is done continuously in order to obtain advance warning of solutions which are either inhomogeneous or have a dimethyl ether content which is unsuitable for subsurface conditions. Tests which can be carried out in facility 40 are density measurements and ultrasound, impedance and acoustic measurements. If testing finds that the solution should not be injected into the formation, the solution can be sent back to the first mixing zone via line 6. If aqueous solution is recycled via line 6 to mixing zone 20, the addition of dimethyl ether via line 2 and/or feed water via line 3 may have to be adjusted to maintain the proper dimethyl ether content. Alternatively, aqueous dimethyl ether solution can be recycled from test facility 40 to the second mixing zone 30. If testing finds that the solution is suitable for injection into the formation, the aqueous solution of dimethyl ether can be sent via line 7 to formation 50 for injection into the formation.

## Claims

1. A process for recovering oil from an oil-bearing formation which process comprises injecting into the formation an aqueous solution of dimethyl ether which solution is prepared by
(a) mixing dimethyl ether and feed water in a first mixing zone to obtain a dispersion of dimethyl ether and water, and
(b) further mixing the dispersion obtained in step (a) in a second mixing zone to obtain the aqueous solution of dimethyl ether.

2. A process according to claim 1, in which the dispersion contains dimethyl ether droplets in a continuous water phase.

3. A process according to claim 1, in which step (a) comprises feeding dimethyl ether and feed water separately to the first mixing zone.

4. A process according to claim 1, in which the first mixing zone contains an in-line mixer.

5. A process according to claim 1 in which the second mixing zone comprises a blending mixer.

6. A process according to claim 3 in which the feed water contains at most 5 parts per million mass (ppm) of multivalent cations.

7. A process according to claim 6 in which the feed water has a total disssolved solids (TDS) content of at most 50,000 ppm.

8. A process according to claim 1 in which the aqueous solution of dimethyl ether contains of from 60 to 95 %wt of water and of from 5 to 40 %wt of dimethyl ether.

9. A process acccording to claim 1 in which the water and dimethyl ether are mixed at a pressure of from 2 to 10 bara and a temperature of from 10 to 90 °C.

10. A process according to claim 1 in which the pressure drop over the first mixing zone is larger than the pressure drop over the second mixing zone based on mixing zones having the same length and diameter.
